# EUROPÄISCHE PATENTSCHRIFT

(11) **EP 1 093 482 B1**
(45) Veröffentlichungstag und Bekanntmachung des Hinweises auf die Patenterteilung: **18.08.2004**
(21) Anmeldenummer: 99908966.7
(22) Anmeldetag: 17.03.1999
(51) Int. Cl.: C08G 18/10, C08G 18/48, C09D 175/08, C09J 175/08, C08G 18/30

(54) **POLYURETHAN UND POLYURETHANHALTIGE ZUBEREITUNG**
POLYURETHANE AND PREPARATION CONTAINING POLYURETHANE
POLYURETHANE ET PREPARATION CONTENANT DU POLYURETHANE

(30) Priorität: 25.03.1998 DE 19813202
(43) Veröffentlichungstag der Anmeldung: 25.04.2001
(73) Patentinhaber: Henkel Kommanditgesellschaft auf Aktien, 40589 Düsseldorf-Holthausen (DE)
(72) Erfinder: KLAUCK, Wolfgang, D-40670 Meerbusch (DE); DUHM, Lydia, D-40593 Düsseldorf (DE); MAJOLO, Martin, D-41812 Erkelenz (DE)
(86) Internationale Anmeldenummer: PCT/EP1999/001728
(87) Internationale Veröffentlichungsnummer: WO 1999/048942

(56) Entgegenhaltungen:
- EP-A- 0 372 561
- EP-A- 0 425 694
- EP-A- 0 748 828
- WO-A-96/38453

## Beschreibung

Die Erfindung betrifft Polyurethane, die unter Verwendung von Polyethem mit besonders enger Molekulargewichtsverteilung (Polydispersität, PD) oder besonderer OH-Funktionalität, oder beidem, herstellbar sind, Zubereitungen, die solche Polyurethane enthalten sowie die Verwendung von solchen Polyurethanen und solche Polyurethane enthaltenden Zubereitungen.

Polyurethane haben als vielseitig verwendbare Kunststoffe insbesondere durch ihren Einsatz in Oberflächenbeschichtungsmitteln, Klebstoffen und in der Dichtungstechnologie Einzug in viele Technologiebereiche gehalten. Besonderes Interesse gilt dabei den Polyurethanen, die über reaktive Endgruppen verfügen, insbesondere über Endgruppen, die mit Wasser reagieren können. Diese Form der Reaktivität erlaubt es, die reaktiven Polyurethane in verarbeitbarem Zustand (in der Regel flüssig bis hochviskos) in der gewünschten Form an den gewünschten Ort zu bringen und durch die Zugabe von Wasser oder sonstigen mit den Endgruppen reaktiven Verbindungen (Härter, beispielsweise bei 2K-Systemen) auszuhärten. Die Zugabe des Härters erfolgt dabei in der Regel vor der Verarbeitung, wobei dem Verarbeiter nach der Härterzugabe nur noch eine begrenzte Verarbeitungszeit zur Verfügung steht.
Es ist jedoch ebenfalls möglich, Polyurethane mit reaktiven Endgruppen ohne Zugabe von Härtern alleine durch die Reaktion mit Luftfeuchtigkeit auszuhärten (1K-Systeme). Solche Systeme weisen gegenüber den 2K-Systemen in der Regel den Vorteil auf, daß für den Anwender das oft lästige Mischen der häufig viskosen Komponenten vor der Anwendung entfällt.

Zu den üblicherweise in 1K- oder 2K-Systemen eingesetzten Polyurethanen mit reaktiven Endgruppen zählen beispielsweise die Polyurethane mit NCO-Endgruppen. Solche Polyurethane härten bei geeigneter Funktionalität bereits unter Einfluß von Luftfeuchtigkeit aus. Unter bestimmten Umständen, insbesondere bei Anwesenheit von Wasser (beispielsweise auf feuchten Oberflächen), kann es bei der Anwendung von Polyurethanen mit NCO-Endgruppen zur Entwicklung von Kohlendioxid kommen, was beispielsweise nachteilige Effekte auf die Oberflächenstruktur haben kann. Weiterhin haften solche Polyurethane häufig nicht auf glatten, inerten Oberflächen, beispielsweise auf Oberflächen aus Glas, Keramik, Metall und dergleichen, was in manchen Fällen die Verwendung eines Primers vor Auftrag des Polyurethans erforderlich macht oder die Verwendung eines Polyurethans zum Versiegeln, Verbinden oder Abdichten einer Oberfläche aus diesen Materialien unmöglich macht.

Um hier Abhilfe zu schaffen, d.h., um eine feste und dauerhafte Verbindung von Polyurethan und beispielsweise den oben genannten Oberflächen zu ermöglichen, wurde vorgeschlagen, als reaktive Endgruppe beispielsweise eine Alkoxysilangruppe in das Polyurethan einzuführen.

So beschreibt die CA-B 836 076 beispielsweise bei Raumtemperatur vernetzbare Polymere, die aushärten, wenn sie Luftfeuchtigkeit ausgesetzt werden. Als hierzu geeignet werden Polymere beschrieben, die mindestens zwei Urethanbindungen (Polyurethane) aufweisen, wobei die ursprünglich vorhandenen Isocyanatfunktionen mit einer Alkoxysilanverbindung umgesetzt wurden. Die Alkoxysilanverbindung weist dabei ein mit Isocyanaten reaktionsfähiges Wasserstoffatom auf und verfügt über mindestens eine hydrolysierbare Alkoxygruppe am Si-Atom, die zwar unter den Reaktionsbedingungen stabil ist, jedoch durch Feuchtigkeit hydrolysiert werden kann. Als geeignetes Polyurethan wird beispielsweise ein Produkt aus einem Polyoxyalkylen-Polyol und einem aromatischen Polyisocyanat beschrieben.

Die EP-A 0 170 865 beschreibt ein Verfahren zur Herstellung von unter Feuchtigkeitsausschluß lagerstabilen Beschichtungs-, Dichtungs- und Klebemassen. Hierzu werden gemäß der Druckschrift NCO-terminierte Polyetherurethane mit Amino- oder Mercaptogruppen aufweisenden Alkoxysilanen mit mindestens zwei Ethersauerstoffatomen in mindestens einem Alkoxyrest zu präpolymeren Silanen umgesetzt.

Die DE-A 25 51 275 beschreibt eine Automobildichtungsmasse, die ausschließlich über Alkoxysilanendgruppen aushärtet. Dabei werden ausgesprochen harte Massen erhalten.

Die EP-B 0 261 409 beschreibt ein Verfahren zur Herstellung von Alkoxy-silan-terminierten, feuchtigkeitshärtenden Polyurethanen, bei dem man Diole und/oder Triole mit Diisocyanaten zu NCO-terminierten Polyurethan-Präpolymeren umsetzt, deren Funktionalität anschließend auf 1 bis 2 einstellt und die so erhältlichen Polyurethan-Präpolymeren mit entsprechenden Organosilikonverbindungen zu Alkoxysilan-terminierten Polyurethanen umsetzt.

Bei allen feuchtigkeitshärtenden Polyurethanen oder solche Polyurethane enthaltenden Zubereitungen (Systeme), insbesondere jedoch bei den siliziumhaltigen Systemen, wirkt sich in der Regel nachteilig aus, daß die Systeme nach der Verarbeitung durch den Aushärtvorgang verspröden und damit einen großen Teil ihrer Elastizität verlieren bzw. geringe Weiterreißfestigkeiten zeigen. Der Elastizitätsverlust tritt insbesondere häufig in der Kälte auf, bei Abkühlung verlieren die bekannten Systeme häufig ihre Rückstellfähigkeit und Flexibilität. Der Versuch die Elastizität und Flexibilität der ausgehärteten Systeme zu verbessern führt jedoch oft zu einer Verschlechterung anderer Materialeigenschaften, beispielsweise einer höheren Klebrigkeit der Oberfläche, oder die Systeme haben vor der Verarbeitung eine so hohe Viskosität, daß beispielsweise Lösemittel eingesetzt werden müssen, um die Verarbeitbarkeit zu gewährleisten. Ebenfalls häufig beobachtet wird eine Verringerung der Lagerstabilität der Systeme. Sowohl die Verschlechterung wesentlicher Material- oder Lagereigenschaften als auch die Verwendung von Lösemitteln ist ökonomisch und ökologisch nicht sinnvoll.

Der Begriff "Polyurethan" steht im Rahmen des nachfolgenden Textes für eine definierte Polyurethanstruktur, wie sie sich im Rahmen einer gezielten ein- oder mehrstufigen Polyurethansynthese erhalten läßt. Der Begriff umfaßt alle Abweichungen von dieser Struktur, wie sie sich durch die statistische Natur des Polyadditionsverfahrens ergeben.

Der Begriff "Zubereitung" steht im Rahmen des vorliegenden Textes für Gemische, enthaltend ein "Polyurethan" oder ein Gemisch aus zwei oder mehr "Polyurethanen" gemäß der oben genannten Definition, sowie gegebenenfalls weitere Zusatzstoffe, wie sie entweder aufgrund der Art der Polyurethansynthese vorliegen (beispielsweise Lösemittel, Katalysatoren) oder nachträglich dem Polyurethan oder dem Gemisch aus zwei oder mehr Polyurethanen zugemischt wurden (beispielsweise Weichmacher, Reaktivverdünner, Füllstoffe und dergleichen).

Es war damit eine Aufgabe der vorliegenden Erfindung ein Polyurethan zur Verfügung zu stellen, das bei einer Verwendung mit reaktiven Endgruppen die oben genannten Nachteile nicht aufweist. Insbesondere war es Aufgabe der vorliegenden Erfindung ein Polyurethan zur Verfügung zu stellen, das über eine oder mehrere Alkoxysilangruppen vernetzbar bzw. härtbar ist und trotzdem, auch bei niedrigen Temperaturen, über hervorragende Elastizität, Flexibilität und Weiterreißfestigkeit verfügt. Weiterhin war es Aufgabe der vorliegenden Erfindung eine Zubereitung zur Verfügung zu stellen, die ein erfindungsgemäßes Polyurethan enthält und deren Viskosität eine gute Verarbeitbarkeit bedingt. Weiterhin war es Aufgabe der vorliegenden Erfindung eine Zubereitung zur Verfügung zu stellen, die trotz niedriger Viskosität gute Materialeigenschaften des vernetzten bzw. ausgehärteten Produkts gewährleistet, insbesondere eine gute Stabilität bei UV- oder Wasserbelastung auf Glasoberflächen.

Es wurde nun gefunden, daß Polyurethane, die unter Verwendung von Polyethern mit einem Molekulargewicht (Mₙ) von mindestens 4.000 und einer Polydispersität PD (M_{w}/Mₙ) von weniger als 1,5, oder unter Verwendung von Polyethern mit einem Molekulargewicht (Mₙ) von mindestens 4.000 und einer OH-Funktionalität von etwa 1,8 bis etwa 2,0, oder unter Verwendung von Polyethern mit allen genannten Merkmalen hergestellt wurden, sowie solche Polyurethane enthaltende Zubereitungen, die oben genannten Nachteile des Standes der Technik nicht aufweisen.

Gegenstand der Erfindung ist damit ein Polyurethan, herstellbar durch Umsetzung von mindestens zwei Komponenten A und B, wobei
a) als Komponente A ein Polyisocyanat oder ein Gemisch aus zwei oder mehr Polyisocyanaten und
b) als Komponente B ein Polyol oder ein Gemisch aus zwei oder mehr Polyolen eingesetzt wird, dadurch gekennzeichnet, daß Komponente B einen Polyether mit einem Molekulargewicht (Mₙ) von mindestens 4.000 und
c) einer Polydispersität PD (M_{w}/Mₙ) von weniger als 1,5 oder
d) einer OH-Funktionalität von etwa 1,8 bis etwa 2,0, oder
e) einer Polydispersität PD (M_{w}/Mₙ) von weniger als 1,5 und einer OH-Funktionalität von etwa 1,8 bis etwa 2,0,
oder ein Gemisch aus zwei oder mehr solcher Polyether, enthält und das Polyurethan nach der Umsetzung mindestens eine mit Wasser reaktive Silangruppe als Endgruppe aufweist oder deren Gemisch mit einer isocyanatgruppe.

Als Komponente A wird im Rahmen der vorliegenden Erfindung ein Polyisocyanat oder ein Gemisch aus zwei oder mehr Polyisocyanaten eingesetzt. Unter Polyisocyanaten werden Verbindungen verstanden, die mindestens zwei Isocyanat-Gruppen (NCO-Gruppen) tragen. In der Regel sind dies Verbindungen der allgemeinen Struktur O=N=C-Z-C=N=O, wobei Z ein linearer oder verzweigter aliphatischer, alicyclischer oder aromatischer Kohlenwasserstoffrest ist, der gegebenenfalls weitere inerte oder in die Umsetzung eingreifende Substituenten aufweisen kann.

Als Polyisocyanate zum erfindungsgemäßen Einsatz als Komponente A kommen beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3-und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H₁₂-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bisisocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Diund Triisocyanate der Di- und Trimerfettsäuren, oder Gemische aus zwei oder mehr der genannten Diisocyanate, in Frage.

Ebenso im Sinne der vorliegenden Erfindung als Polyisocyanate zur Herstellung der Komponente A geeignet sind drei- oder höherwertige Isocyanate, wie sie beispielsweise durch Oligomerisierung von Diisocyanaten, insbesondere durch Oligomerisierung der oben genannten Isocyanate, erhältlich sind. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Besonders bevorzugt ist im Rahmen der vorliegenden Erfindung der Einsatz von TDI und MDI als Komponente A.

Als Komponente B wird im Rahmen der vorliegenden Erfindung ein Polyol oder ein Gemisch aus zwei oder mehr Polyolen eingesetzt, wobei Komponente B einen Polyether mit einem Molekulargewicht (Mₙ) von mindestens 4.000 und
c) einer Polydispersität PD (M_{w}/Mₙ) von weniger als 1,5 oder
d) einer OH-Funktionalität von etwa 1,8 bis etwa 2,0, oder
e) einer Polydispersität PD (M_{w}/Mₙ) von weniger als 1,5 und einer OH-Funktionalität von etwa 1,8 bis etwa 2,0,
oder ein Gemisch aus zwei oder mehr solcher Polyether, enthält.

Es hat sich im Rahmen der vorliegenden Erfindung gezeigt, daß sich durch den Einsatz solcher Polyether bei der Herstellung von Polyurethanen auch nach dem Aushärten besonders elastische und flexible Polyurethane mit guten Materialeigenschaften erhalten lassen.

Der Begriff "Polyol" umfaßt im Rahmen der vorliegenden Erfindung eine Verbindung, die mindestens zwei OH-Gruppen aufweist, unabhängig davon, ob die Verbindung noch weitere funktionelle Gruppen aufweist. Vorzugsweise umfaßt ein im Rahmen der vorliegenden Erfindung eingesetztes Polyol jedoch nur OH-Gruppen als funktionelle Gruppen, oder, sofern weitere funktionelle Gruppen vorliegen sind alle weiteren funktionellen Gruppen zumindest gegenüber Isocyanaten unter den bei der Umsetzung von Komponente A und B herrschenden Bedingungen nicht reaktiv.

In einer bevorzugten Ausführungsform weisen die im Rahmen der vorliegenden Erfindung in Komponente B einsetzbaren Polyether eine PD (M_{w}/Mₙ) von weniger als etwa 1,48 auf. Besonders bevorzugt ist es, wenn die PD weniger als etwa 1,45 und besonders bevorzugt weniger als etwa 1,4 beträgt. Besonders bevorzugt sind Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14.

In einer weiteren bevorzugten Ausführungsform der Erfindung enthält Komponente B einen Polyether mit einem Molekulargewicht (Mₙ) von mindestens etwa 4.000 und einer durchschnittlichen OH-Funktionalität (durchschnittliche Zahl der OH-Gruppen pro Polyethermolekül) von mindestens etwa 1,8 bis etwa 2 und bevorzugt etwa 1,9 bis etwa 2,0. Es ist besonders bevorzugt, wenn die OH-Funktionalität des Polyethers etwa 1,93 bis etwa 2,0 beträgt, insbesondere etwa 1,95 oder etwa 1,98 bis etwa 2,0. In einer weiteren bevorzugten Ausführungsform besteht Komponente B aus einem solchen Polyether oder einem Gemisch aus zwei oder mehr solcher Polyether. Das heißt, die Funktionalität der gesamten Komponente B weist einen der oben genannten Werte auf.

Die erfindungsgemäß einzusetzenden Polyether werden in einer dem Fachmann bekannter Weise durch katalysierte Umsetzung einer mindestens ein reaktives Wasserstoffatom aufweisenden Startverbindung mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon umgesetzt. Zur Erzielung von besonders engen Molekulargewichtsverteilungen (PD), wie sie im Rahmen der vorliegenden Erfindung benötigt werden, hat sich die sogenannte DMC-Katalyse, beispielsweise mit Zinkhexacyanokobaltat bewährt, wie sie beispielsweise in der US-A 3,278,457 beschrieben ist.

Die im erfindungsgemäßen Polyurethan eingesetzten Polyether werden vorzugsweise unter Einsatz von Propylenoxid hergestellt.

Geeignete Startverbindungen sind beispielsweise Wasser, Ethylenglykol, Propylenglykol-1,2 oder -1,3, Butylenglykol-1,4 oder -1,3 Hexandiol-1,6, Octandiol-1,8, Neopentylglykol, 1,4-Hydroxymethylcyclohexan oder 2-Methyl-1,3-propandiol.

In einer bevorzugten Ausführungsform der Erfindung weisen die Polyether ein Molekulargewicht (Mₙ) von etwa 5.000 bis etwa 30.000 auf, insbesondere etwa 6.000 bis etwa 20.000. Gute Ergebnisse lassen sich beispielsweise mit Molekulargewichten von etwa 8.000 bis etwa 15.000 erzielen, beispielsweise etwa 11.000, 12.000 oder 13.000.

Die erfindungsgemäß einzusetzenden Polyole weisen vorzugsweise eine OH-Zahl von etwa 5 bis etwa 15, vorzugsweise etwa 10 auf. Der Anteil an primären OH-Gruppen sollte unter etwa 20%, bezogen auf die gesamten OH-Gruppen, liegen, vorzugsweise bei weniger als 15%. Es ist besonders vorteilhaft, wenn die Säurezahl der eingesetzten Polyether bei weniger als etwa 0,1, vorzugsweise bei weniger als 0,05 und insbesondere bei weniger als 0,02 liegt.

Neben den bereits beschriebenen Polyethern kann die im Rahmen der vorliegenden Erfindung eingesetzte Komponente B noch weitere Polyole enthalten.

Komponente B kann beispielsweise Polyesterpolyole mit einem Molekulargewicht von etwa 200 bis etwa 30.000 enthalten. So können in Komponente B beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxy-methylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuß an Dicarbonsäuren und/oder Tricarbonsäuren, oder deren reaktiven Derivaten, zu Polyesterpolyolen kondensiert werden. Geeignete Dicarbonsäuren sind beispielsweise Bernsteinsäure und ihre höheren Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Im Rahmen der Erfindung besonders geeignet sind Polyesterpolyole aus mindestens einer der genannten Dicarbonsäuren und Glycerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon. Besonders geeignete Säuren sind Isophthalsäure oder Adipinsäure oder deren Gemisch.

Polyesterpolyole mit hohem Molekulargewicht umfassen beispielsweise die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen eingesetzt werden. Die Polycarbonsäuren können aliphatisch, cycloaliphatisch, aromatisch und/oder heterocyclisch sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.

Ebenso geeignet sind die reinen oder gemischten Alkylenoxidaddukte der Polyesterpolyole.

Unter Alkylenoxidaddukten werden im Rahmen der vorliegenden Erfindung die Umsetzungsprodukte der genannten Polyole mit C₁₋₁₀-Alkylenoxiden, beispielsweise Ethylenoxid, Propylenoxid, Butylenoxid, Styroloxid, Tetrahydrofuran oder Epichlorhydrin oder Gemischen aus zwei oder mehr davon. Unter "reinen" Alkylenoxidaddukten werden dabei die Umsetzungsprodukte mit nur einer Sorte Alkylenoxid, unter "gemischten" Alkylenoxidaddukten die Umsetzungsprodukte mit zwei oder mehr Sorten Alkylenoxiden verstanden.

Weiterhin zum Einsatz in Komponente B geeignet sind beispielsweise Polyether, die durch Polymerisate modifiziert wurden. Derartige Produkte sind beispielsweise erhältlich, indem Styrol, Acrylnitril, Vinylacetat, Acrylsäureester oder Methacrylsäureester, oder Gemische aus zwei oder mehr davon, in der Gegenwart von Polyethern polymerisiert werden.

Zum Einsatz in Komponente B geeignet sind, wie bereits angedeutet, Lactonpolyole und deren Alkylenoxidaddukte. Lactonpolyole lassen sich beispielsweise durch Umsetzung eines Lactons, beispielsweise ε-Caprolacton, mit einem polyfunktionellen Initiator, beispielsweise einem polyfunktionellen Alkohol, einem Amin oder einem Aminoalkohol hergestellt werden. Die Herstellung kann gegebenenfalls in Gegenwart eines Alkylenoxids oder eines Gemischs aus zwei oder mehr Alkylenoxiden erfolgen.

Weiterhin zum Einsatz in Komponente B geeignet sind beispielsweise Polyalkanolamine und deren reine oder gemischte Alkylenoxidaddukte, nicht reduzierende Zucker und Zuckerderivate und deren reine oder gemischte Alkylenoxidaddukte, die reinen oder gemischten Alkylenoxidaddukte von Anilin-Formaldehydkondensationsprodukten und Polyphenolen, gegenüber Isocyanaten reaktive Fette und Fettderivate, beispielsweise Ricinusöl, und deren reine oder gemischte Alkylenoxidaddukte, Vinylpolymere mit zwei oder mehr OH-Gruppen und deren reine oder gemischte Alkylenoxidaddukte.
Komponente B kann in Rahmen der vorliegenden Erfindung damit eine oder mehrere Polyolkomponenten enthalten, wobei jedoch mindestens ein Polyether mit einem Molekulargewicht (Mₙ) von mindestens 4.000 und
c) einer Polydispersität PD (M_{w}/Mₙ) von weniger als 1,5 oder
d) einer OH-Funktionalität von etwa 1,8 bis etwa 2,0, oder
e) einer Polydispersität PD (M_{w}/Mₙ) von weniger als 1,5 und einer OH-Funktionalität von etwa 1,8 bis etwa 2,0
in Komponente B vorliegt. Es ist im Rahmen der vorliegenden Erfindung bevorzugt, wenn der Anteil dieses Polyethers oder eines Gemischs aus zwei oder mehr solcher Polyether mindestens etwa 90 Gew.-%, vorzugsweise darüber, beträgt.

Vorteilhafterweise beträgt die OH-Zahl der Komponente B etwa 7 bis etwa 30, insbesondere etwa 9 bis etwa 20, beispielsweise etwa 10, 11, 12, 14, 16 oder 18 mg KOH/g.

Zur Herstellung des Polyurethans wird die Komponente A mit der Komponente B unter in der Polyurethanchemie üblichen Bedingungen umgesetzt, in der Regel in der Anwesenheit von Katalysatoren.

Vorzugsweise wird das Verhältnis von NCO-Gruppen zu OH-Gruppen so eingestellt, daß das Molekulargewicht (Mₙ) des erfindungsgemäßen Polyurethans mindestens etwa 8.000, vorzugsweise mehr als etwa 20.000 bis etwa 40.000 beträgt.

Es kann vorteilhaft sein, wenn ein erfindungsgemäßes Polyurethanmolekül mindestens etwa 4 Urethangruppen aufweist. Weist das erfindungsgemäße Polyurethanmolekül NCO-Gruppen auf, so beträgt die Zahl der NCO-Gruppen pro Molekül in einer bevorzugten Ausführungsform etwa 1,5 bis etwa 3, insbesondere etwa 1,8 bis etwa 2,2.

In einer weiteren bevorzugten Ausführungsform der Erfindung enthält das erfindungsgemäße Polyurethan seitenständig oder endständig zum Polymerrückgrat eine Gruppe der allgemeinen Formel I 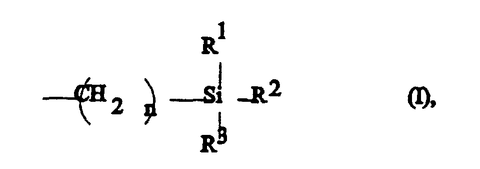 wobei R¹ und R² gleich oder verschieden sind und unabhängig voneinander für einen linearen oder verzweigten C₁₋₁₀-Alkylrest oder für R³ stehen, R³ für einen linearen oder verzweigten C₁₋₈-Alkoxy- oder C₁₋₈-Acyloxyrest und n für eine Zahl von 1 bis 8 steht.

Zur Herstellung des erfindungsgemäßen Polyurethans mit einer oder mehreren der oben angegebenen Endgruppen wird die Umsetzung der Komponenten A und B beispielsweise in Gegenwart einer Komponente C durchgeführt, wobei
f) als Komponente C eine Verbindung der allgemeinen Formel II 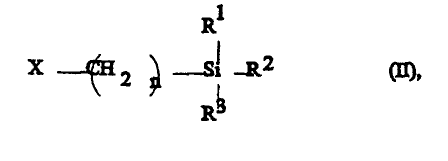
eingesetzt wird, worin R¹ und R² gleich oder verschieden sind und unabhängig voneinander für einen linearen oder verzweigten C₁₋₁₀-Alkylrest oder für R³ stehen, R³ für einen linearen oder verzweigten C₁₋₈-Alkoxy- oder C₁₋₈-Acyloxyrest steht, X für einen mit einer Isocyanatgruppe reaktionsfähigen Rest oder einen Glycidylrest steht und n für eine Zahl von 1 bis 8 steht.

Es ist jedoch ebenso möglich, zuerst die Komponenten A und B miteinander zu einem Präpolymeren umzusetzen, so daß eine ausreichende Anzahl an NCO-Endgruppen entsteht und das so erhaltene Präpolymere anschließend mit Komponente C umzusetzen. Dabei kann die Komponente C lediglich eine Verbindung der allgemeinen Formel II enthalten, sie kann jedoch ebensogut ein Gemisch aus zwei oder mehr Verbindungen der allgemeinen Formel II enthalten.

In der allgemeinen Formel II steht X vorzugsweise für -SH, -NHR⁴, -(NH-CH₂-CH₂)ₘ-NHR⁴ oder Glycidyl, wobei R⁴ beispielsweise für Wasserstoff oder einen linearen oder verzweigten, gegebenenfalls mit einer weiteren, gegenüber Isocyanaten inerten funktionellen Gruppe substituierten aliphatischen oder cycloaliphatischen oder aromatischen Kohlenwasserstoffrest oder ein Gemisch aus zwei oder mehr davon, mit 1 bis 10 C-Atomen steht.

Zum Einsatz in Komponente C geeignet sind beispielsweise H₂N-(CH₂)₃-Si(O-C₂H₅)₃, HO-CH(CH₃)-CH₂-Si(O-CH₃)₃, HO-(CH₂)₃-Si(O-CH₃)₃, HO-CH₂-CH₂-O-CH₂-CH₂-Si(O-CH₃)₃, (HO-C₂H₄)₂N-(CH₂)₃-Si(O-CH₃)₃, HO-(C₂H₄-O)₃-C₂H₄-N(CH₃)-(CH₂)₃-Si(O-C₄H₉)₃, H₂N-CH₂-C₆H₄-CH₂-CH₂-Si(O-CH₃)₃, HS-(CH₂)₃-Si(O-CH₃)₃, H₂N-(CH₂)₃-NH-(CH₂)₃-Si(O-CH₃)₃, H₂N-CH₂-CH₂-NH-(CH₂)₂-Si(OCH₃)₃, H₂N-(CH₂)₂-NH-(CH₂)₃-Si(O-CH₃)₃, HO-CH(C₂H₅)-CH₂-Si(O-CH₃)₃, HO-(CH₂)₃-Si(O-C₂H₅)₃, HO-CH₂-CH₂-O-CH₂-CH₂-Si(O-C₂H₅)₃, (HO-C₂H₄)₂N-(CH₂)₃-Si(O-C₂H₅)₃, H₂N-CH₂-C₂H₄-CH₂-CH₂-Si(O-C₂H₅)₃, HS(CH₂)₃-Si(O-C₂H₅)₃, H₂N-(CH₂)₃-NH-(CH₂)₃-Si(O-C₂H₅), H₂N-CH₂-CH₂-NH-(CH₂)₂-Si(O-C₂H₅)₃, H₂N-(CH₂)₂-NH-(CH₂)₃-Si(O-C₂H₅)₃, sowie Gemische aus zwei oder mehr davon.

Vorzugsweise werden Verbindungen eingesetzt, die mindestens eine Methoxygruppe oder eine Ethoxygruppe am Siliziumatom tragen, besonders bevorzugt sind Verbindungen mit zwei oder drei Methoxygruppen oder zwei oder drei Ethoxygruppen oder beliebigen Gemischen aus Methoxy und Ethoxygruppen.

Im Rahmen der vorliegenden Erfindung werden insbesondere 3-Aminopropyltrimethoxysilan, 3-Aminopropyldimethoxymethylsilan, 3-Aminopropyltriethoxy-silan, 3-Aminopropyldimethoxyphenylsilan und 3-Aminopropyldiethoxyethylsilan eingesetzt.

Komponente C wird in einer bevorzugten Ausführungsform der Erfindung in einer solchen Menge eingesetzt, daß ihr Anteil im erfindungsgemäßen Polyurethan weniger als etwa 3 Gew.-%, insbesondere etwa 0,5 bis etwa 2,5 Gew.-%, beispielsweise etwa 1,8 bis etwa 2,2 Gew.-%, beträgt.

Die Herstellung des erfindungsgemäßen Polyurethans kann sowohl in einem einstufigen als auch in einem mehrstufigen Verfahren erfolgen.

Beim einstufigen Verfahren werden zunächst alle Ausgangsstoffe in Gegenwart eines organischen Lösemittels bei einem Wassergehalt von weniger als etwa 0,5 Gew.-% gemischt. Die Mischung wird auf etwa 80 bis etwa 200°C, insbesondere auf etwa 100 bis etwa 140°C für einen Zeitraum von etwa 1 bis etwa 30, insbesondere etwa 2 bis etwa 4 Stunden erhitzt. Die Reaktionszeit kann durch Zugabe von Katalysatoren gegebenenfalls verkürzt werden. Als Katalysatoren sind beispielsweise tertiäre Amine geeignet. Beispielsweise sind dies Triethylamin, Dimethylbenzylamin, Bis-dimethylaminoethylether und Bis-methylaminomethylphenol. Besonders geeignet sind beispielsweise 1-Methylimidazol, 1-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylaminopyridin (DMAP), 4-Pyrrolidinopyridin, 4-Morpholinopyridin und 4-Methylpyridin. Ebenfalls als Katalysatoren geeignet sind beispielsweise metallorganische Verbindungen wie Eisen-, Titan- oder Zinnverbindungen geeignet, insbesondere die 1,3-Dicarbonylverbindungen des Eisens oder des 2- bzw. 4-wertigen Zinns, insbesondere die Sn(II)-Carboxy-late bzw. die Dialkyl-Sn-(IV)-Dicarboxylate oder die entsprechenden Dialk-oxylate, beispielsweise Dibutylzinndilaurat, Dibutylzinndiacetat, Dioctylzinndiacetat, Dibutylzinnmaleat, Zinn(II)octoat, Zinn(II)phenolat oder die Acetyl-acetonate des 2- bzw. 4-wertigen Zinns.

Vorzugsweise wird jedoch ohne Katalysator gearbeitet, auf Lösemittel kann gegebenenfalls verzichtet werden.

Insbesondere, wenn das erfindungsgemäße Polymere unter Verwendung von Komponente C hergestellt wird, wird vorteilhafterweise nach dem mehrstufigen Verfahren gearbeitet. Hierbei wird zunächst durch geeignete Wahl der stöchiometrischen Verhältnisse aus den Komponenten A und B nach dem obigen Verfahren ein Präpolymeres mit NCO-Endgruppen hergestellt, das in einer zweiten Stufe mit weiteren Verbindungen, beispielsweise mit Komponente C, umgesetzt werden kann.

Anschließend wird das Präpolymere mit der Komponente C bei 50 bis 120°C so umgesetzt, daß die NCO-Gruppen ganz oder teilweise mit der Komponente C reagieren.

Das erfindungsgemäße Polyurethan weist eine Viskosität von etwa 50.000 bis etwa 700.000 mPas (Brookfield RVT, 23°C, Spindel 7, 2,5 U/min) auf.

Das erfindungsgemäße Polyurethan kann bereits in der bislang beschriebenen Form zu seinem endgültigen Einsatz kommen. In der Regel ist es jedoch vorteilhaft, wenn das erfindungsgemäße Polyurethan in einer Zubereitung zum Einsatz kommt, die weitere Verbindungen, beispielsweise zur Regulierung der Viskosität oder der Materialeigenschaften, enthält.

Es ist beispielsweise möglich, daß die Viskosität des erfindungsgemäßen Polyurethans für bestimmte Anwendungen zu hoch ist. Es wurde jedoch gefunden, daß sich die Viskosität des erfindungsgemäßen Polyurethans in der Regel durch Verwendung eines "Reaktivverdünners" auf einfache und zweckmäßige Weise verringern läßt, ohne daß die Materialeigenschaften des ausgehärteten Polyurethans wesentlich darunter leiden.

Ein weiterer Gegenstand der Erfindung ist daher eine Zubereitung, enthaltend ein erstes, erfindungsgemäßes Polyurethan gemäß der vorstehenden beschreibung und mindestens ein zweites Polyurethan mit mindestens einer gegenüber Wasser reaktiven Endgruppe, insbesondere einer NCO-Gruppe oder einer Alkoxysilangruppe, oder beidem, dessen Molekulargewicht (Mₙ) höchstens 10.000 beträgt und um mindestens 3.000 vorzugsweise mindestens 5.000 geringer ist als das Molekulargewicht des ersten Polyurethans, als Reaktivverdünner.

Vorzugsweise weist der Reaktivverdünner mindestens eine funktionelle Gruppe auf, die unter Feuchtigkeitseinfluß in der Lage ist mit einer reaktiven Gruppe des ersten, erfindungsgemäßen Polyurethans unter Kettenverlängerung bzw. Vernetzung zu reagieren (Reaktivverdünner). Bei der mindestens einen funktionellen Gruppe kann es sich um jede unter Feuchtigkeitseinfluß mit Vernetzung oder Kettenverlängerung reagierende funktionelle Gruppe handeln.

Als Reaktivverdünner eignen sich alle polymeren Verbindungen, die mit dem ersten, erfindungsgemäßen Polyurethan unter Verringerung der Viskosität mischbar sind und die Materialeigenschaften des nach Aushärtung oder Vernetzung entstehenden Produkts weitgehend unbeeinflußt lassen, oder zumindest nicht so nachteilig beeinflussen, daß die Unbrauchbarkeit des Produkts daraus resultiert. Geeignet sind beispielsweise Polyester, Polyether, Polymerisate von Verbindungen mit olefinisch ungesättigter Doppelbindung oder Polyurethane, sofern die oben genannten Voraussetzungen erfüllt werden.

Vorzugsweise handelt es sich bei den Reaktivverdünnern jedoch um Polyurethane mit wenigstens einer NCO- oder Alkoxysilangruppe als reaktive Gruppe.

Die Reaktivverdünner können ein oder mehrere funktionelle Gruppen aufweisen, bevorzugt liegt die Zahl der funktionellen Gruppen jedoch bei 1 bis etwa 6, insbesondere bei etwa 2 bis etwa 4, beispielsweise etwa 3.

Die Viskosität der Reaktivverdünner beträgt in einer bevorzugten Ausführungsform weniger als etwa 20.000 mPas, insbesondere etwa 1.000 bis etwa 10.000, beispielsweise etwa 3.000 bis etwa 6.000 mPas (Brookfield RVT, 23°C, Spindel 7, 2,5 U/min).

Die im Rahmen des erfindungsgemäßen Verfahrens einsetzbaren Reaktivverdünner können eine beliebige Molekulargewichtsverteilung (PD) aufweisen, und sind demnach nach den üblichen Methoden der Polymerchemie herstellbar.

Vorzugsweise werden als Reaktivverdünner Polyurethane eingesetzt, die aus einer Polyolkomponente und einer Isocyanatkomponente hergestellt werden können.

Der Begriff "Polyolkomponente" umfaßt dabei im Rahmen des vorliegenden Textes ein einzelnes Polyol oder ein Gemisch von zwei oder mehr Polyolen, die zur Herstellung von Polyurethanen herangezogen werden können. Unter einem Polyol wird ein polyfunktioneller Alkohol verstanden, d.h., eine Verbindung mit mehr als einer OH-Gruppe im Molekül.

Als Polyolkomponente zur Herstellung der Reaktivverdünner kann eine Vielzahl von Polyolen eingesetzt werden. Beispielsweise sind dies aliphatische Alkohole mit 2 bis 4 OH-Gruppen pro Molekül. Die OH-Gruppen können sowohl primär als auch sekundär sein. Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben. Ebenfalls geeignet sind höherfunktionelle Alkohole wie beispielsweise Glycerin, Trimethylolpropan, Pentaerythrit sowie oligomere Ether der genannten Substanzen mit sich selbst oder im Gemisch aus zwei oder mehr der genannten Ether untereinander.

Weiterhin können als Polyolkomponente zur Herstellung der Reaktivverdünner die Umsetzungsprodukte niedermolekularer polyfunktioneller Alkohole mit Alkylenoxiden, sogenannte Polyether, eingesetzt werden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen oder Hexandiolen mit Ethylenoxid, Propylenoxid und/oder Butylenoxid. Ferner sind auch die Umsetzungsprodukte polyfunktioneller Alkohole wie Glycerin, Trimethylolethan und/oder Trimethylolpropan, Pentaerythrit oder Zuckeralkohole, mit den genannten Alkylenoxiden zu Polyetherpolyolen geeignet. Besonders geeignet sind Polyetherpolyole mit einem Molekulargewicht von etwa 100 bis etwa 10.000, vorzugsweise von etwa 200 bis etwa 5.000. Ganz besonders bevorzugt ist im Rahmen der vorliegenden Erfindung Polypropylenglykol mit einem Molekulargewicht von etwa 300 bis etwa 2.500. Ebenfalls als Polyolkomponente zur Herstellung der Komponente A geeignet sind Polyetherpolyole, wie sie beispielsweise aus der Polymerisation von Tetrahydrofuran entstehen.

Die Polyether werden, wie bereits beschrieben, durch Umsetzung der Startverbindung mit einem reaktiven Wasserstoffatom mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon, umgesetzt.

Geeignete Startverbindungen sind beispielsweise, wie schon genannt, Wasser, Ethylenglykol, Propylenglykol-1,2 oder -1,3, Butylenglykol-1,4 oder -1,3 Hexandiol-1,6, Octandiol-1,8, Neopentylglykol, 1,4-Hydroxymethylcyclohexan, sowie weiterhin 2-Methyl-1,3-propandiol, Glycerin, Trimethylolpropan, Hexantriol-1,2,6, Butantriol-1,2,4 Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen.

Ebenfalls zum Einsatz als Polyolkomponente geeignet sind Polyether, die durch Vinylpolymere modifiziert wurden. Derartige Produkte sind beispielsweise erhältlich, indem Styrol- und/oder Acrylnitril in der Gegenwart von Polyethern polymerisiert werden.

Ebenfalls als Polyolkomponente für die Herstellung des Reaktivverdünners geeignet, sind Polyesterpolyole mit einem Molekulargewicht von etwa 200 bis etwa 5.000. So können beispielsweise Polyesterpolyole verwendet werden, die durch die bereits oben beschriebene Umsetzung von niedermolekularen Alkoholen, insbesondere von Ethylenglykol, Diethylenglycol, Neopentylglycol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind, wie bereits genannt, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind, wie bereits oben beschrieben, durch Polykondensation herstellbar. So können difunktionelle und/oder trifunktionelle Alkohole mit einem Unterschuß an Dicarbonsäuren und/oder Tricarbonsäuren, oder deren reaktiven Derivaten, zu Polyesterpolyolen kondensiert werden. Geeignete Dicarbonsäuren und Tricarbonsäuren sowie geeignete Alkohole wurden bereits oben genannt.

Im Rahmen der vorliegenden Erfindung besonders bevorzugt als Polyolkomponente zur Herstellung der Reaktivverdünner eingesetzte Polyole sind beispielsweise Dipropylenglykol und/oder Polypropylenglykol mit einem Molekulargewicht von etwa 400 bis etwa 2500, sowie Polyesterpolyole, bevorzugt Polyesterpolyole erhältlich durch Polykondensation von Hexandiol, Ethylenglycol, Diethylenglycol oder Neopentylglycol oder Gemischen aus zwei oder mehr davon und Isophthalsäure oder Adipinsäure, oder deren Gemische.

Ebenfalls als Polyolkomponente zur Herstellung der Reaktivverdünner geeignet sind Polyacetale. Unter Polyacetalen werden Verbindungen verstanden, wie sie aus Glykolen, beispielsweise Diethylenglykol oder Hexandiol mit Formaldehyd erhältlich sind. Im Rahmen der Erfindung einsetzbare Polyacetale können ebenfalls durch die Polymerisation cyclischer Acetale erhalten werden.

Weiterhin als Polyole zur Herstellung der Reaktivverdünner geeignet sind Polycarbonate. Polycarbonate können beispielsweise durch die Reaktion von Diolen wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Ebenfalls als Polyolkomponente zur Herstellung der Reaktivverdünner geeignet, sind OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuß vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxy-propylacrylat, 2-Hydroxypropylmethacrylat, 3-Hydroxypropylacrylat oder 3-Hydroxypropylmethacrylat oder Gemische aus zwei oder mehr davon.

Zur Herstellung der erfindungsgemäß bevorzugten Reaktivverdünner wird die entsprechende Polyolkomponente jeweils mit einem mindestens difunktionellen Isocyanat umgesetzt. Als mindestens difunktionelles Isocyanat kommt zur Herstellung der Komponente A grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen, bevorzugt.

Zur Herstellung der Reaktivverdünner besonders geeignet sind die oben bereits genannten Polyisocyanate.

Vorzugsweise weist die im Rahmen der vorliegenden Erfindung als Reaktivverdünner vorliegende Verbindung mindestens eine Isocyanatgruppe oder eine Alkoxysilangruppe auf, wobei unter den Alkoxysilangruppen die Di- und Trialkoxysilangruppen bevorzugt sind.

Es kann unter bestimmten Anwendungsbedingungen vorteilhaft sein, wenn die funktionellen Gruppen des Reaktivverdünners eine andere Reaktivität gegenüber Feuchtigkeit oder dem jeweils eingesetzten Härter aufweisen, als die funktionellen Gruppen des ersten Polyurethans mit dem höheren Molekulargewicht. So kann es beispielsweise erwünscht sein, daß der Reaktivverdünner langsamer reagiert als das erste Polyurethan, um den Verdünnungseffekt möglichst lange aufrecht zu erhalten. Wenn das erste Polyurethan eine oder mehrere Alkoxysilan-Endgruppen aufweist, so läßt sich die Reaktivität der Endgruppen des Reaktiwerdünners beispielsweise durch Verwendung anderer Alkoxygruppen als in den Endgruppen des ersten Polyurethans steuern. Liegen beispielsweise in den Endgruppen des ersten Polyurethans Methoxygruppen vor, so läßt sich die Reaktivität des Reaktivverdünners demgegenüber verringern, wenn als reaktive Gruppen Alkoxysilangruppen eingesetzt werden, die Alkoxygruppen mit zwei oder mehr C-Atomen enthalten. Ebenso ist es möglich, die Reaktivität des Reaktivverdünners dahingehend zu steuern, daß er schneller vernetzt bzw. aushärtet als das erste Polymere und damit beispielsweise häufig zu einer Verbesserung der Lagerstabilität beiträgt.

In einer bevorzugten Ausführungsform der Erfindung weist der Reaktivverdünner als mindestens eine mit Wasser reaktive Endgruppe eine Endgruppe der allgemeinen Formel I auf, wobei R¹ und R² und R³ die bereits genannten Bedeutungen haben.

Die Herstellung der im Rahmen der vorliegenden Erfindung bevorzugt eingesetzten Reaktivverdünner kann beispielsweise analog der oben beschriebenen Herstellung des ersten Polyurethans erfolgen. Dabei wird zunächst aus Isocyanatkomponente und Polyolkomponente ein Präpolymeres mit einer oder mehreren NCO-Endgruppen hergestellt, die anschließend mit geeigneten Alkoxysilanen zu den bevorzugten Reaktivverdünnern umgesetzt werden. Geeignete Alkoxysilane sind insbesondere die oben beschriebenen Alkoxy- silane, wie sie beispielsweise zum Einsatz in Komponente C geeignet sind.

Die erfindungsgemäße Zubereitung enthält das erste Polyurethan und den Reaktivverdünner oder ein Gemisch aus zwei oder mehr Reaktivverdünnern in der Regel in einem solchen Verhältnis, daß die Zubereitung eine Viskosität von höchstens 200.000 mPas (Brookfield RVT, 23°C, Spindel 7, 2,5 U/min) aufweist. Hierzu ist in der Regel ein Anteil an Reaktivverdünner (hierunter fällt auch ein Gemisch aus zwei oder mehr Reaktivverdünnem), bezogen auf die gesamte Zubereitung, von etwa 1 Gew.-% bis zu etwa 70 Gew.-%, insbesondere von etwa 5 Gew.-% bis etwa 25 Gew.-% geeignet.

Zur Reduzierung der Viskosität der erfindungsgemäßen Polyurethans läßt sich neben oder anstatt eines Reaktivverdünners auch ein Weichmacher einsetzen.
Als "Weichmacher" werden im Rahmen der vorliegenden Erfindung Verbindungen bezeichnet, die gegenüber dem ersten Polyurethan inert sind und die Verringerung der Viskosität einer Zubereitung bewirken, die ein erfindungsgemäßes Polyurethan oder ein Gemisch aus zwei oder mehr erfindungsgemäßen Polyurethanen enthält.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäure-ester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf).

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Ebenfalls im Rahmen der vorliegenden Erfindung als Weichmacher geeignet sind Diurethane. Diurethane lassen sich beispielsweise durch Umsetzung von Diolen mit OH-Endgruppen mit monofunktionellen Isocyanaten herstellen, indem die Stöchiometrie so gewählt wird, daß im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Zur Herstellung der Diurethane auf Basis von Diolen können Diole mit 2 bis etwa 22 C-Atomen eingesetzt werden, beispielsweise Ethylenglykol, Propylenglykol, 1,2-Propandiol, Dibutandiol, Hexandiol, Octandiol oder technische Gemische von Hydroxyfettalkoholen mit etwa 14 C-Atomen, insbesondere Hydroxystearylalkohol. Bevorzugt werden lineare Diolmischungen, insbesondere solche, die Polypropylenglykol mit einem mittleren Molekulargewicht (Mₙ) von etwa 1.000 bis etwa 6.000 in Mengen über etwa 50 Gew.-%, insbesondere über etwa 70 Gew.-% enthalten. Ganz besonders bevorzugt werden Diurethane ausschließlich auf der Basis von Propylenglykol mit gleichen oder verschiedenen mittleren Molekulargewichten von etwa 1.000 bis etwa 4.000. Die freien OH-Gruppen der Diolmischungen werden im wesentlichen alle mit aromatischen oder aliphatischen Monoisocyanaten oder deren Gemischen abreagiert. Bevorzugte Monoisocyanate sind Phenylisocyanat oder Toluylenisocyanat oder deren Gemische.

Zur Herstellung der Diurethane auf Basis von Diisocyanaten werden aromatische oder aliphatische Diisocyanate oder deren Gemische eingesetzt. Als aromatische oder aliphatische Diisocyanate sind beispielsweise die Isocyanate geeignet, wie sie oben als zur Herstellung des erfindungsgemäßen Polyurethans geeignet angegeben wurden, vorzugsweise Toluylendiisocyanat (TDI). Die freien NCO-Gruppen der Diisocyanate werden im wesentlichen vollständig mit monofunktionellen Alkoholen, vorzugsweise linearen monofunktionellen Alkoholen oder Gemischen aus zwei oder mehr verschiedenen monofunktionellen Alkoholen umgesetzt. Besonders geeignet sind Gemische linearer monofunktioneller Alkohole. Geeignete Monoalkohole sind beispielsweise Monoalkohole mit 1 bis etwa 24 C-Atomen, beispielsweise Methanol, Ethanol, die Stellungsisomeren von Propanol, Butanol, Pentanol, Hexanol, Heptanol, Octanol, Decanol oder Dodecanol, insbesondere die jeweiligen 1-Hydroxy-Verbindungen, sowie Gemische aus zwei oder mehr davon. Ebenfalls geeignet sind sogenannte "technische Gemische" von Alkoholen und endgruppenverschlossene Polyalkylenglykolether. Besonders geeignet sind Alkoholgemische, die Polypropylenglykolmonoalkylether mit einem mittleren Molekulargewicht (Mₙ) von etwa 200 bis etwa 2.000 in einer Menge von mehr als etwa 50 Gew.-%, vorzugsweise mehr als etwa 70 Gew.-%, bezogen auf die Alkoholmischung, enthalten. Besonders bevorzugt werden Di-urethane auf Basis von Diisocyanaten, deren freie NCO-Gruppen vollständig mittels Polypropylenglykolmonoalkylether mit einem mittleren Molekulargewicht von etwa 500 bis etwa 2.000 umgesetzt worden sind.

Die erfindungsgemäße Zubereitung enthält die genannten Weichmacher in der Regel in einer solchen Menge, daß die Viskosität der Zubereitung höchstens etwa 200.000 mPas (Brookfield RVT, 23°C, Spindel 7, 2,5 U/min) beträgt.

Unter Berücksichtigung der unterschiedlichen Polyurethane, die in der Zubereitung enthalten sein können, kann zum Erreichen der angegebenen Viskosität eine unterschiedliche Menge an Weichmacher erforderlich sein. In der Regel läßt sich die geforderte Viskosität jedoch beispielsweise durch Zugabe einer Menge von etwa 1 bis etwa 30 Gew.-% Weichmacher, bezogen auf die Zubereitung, erreichen. Eine Erhöhung der Weichmachermenge führt in der Regel zu einem weiteren Absinken der Viskosität.

Die erfindungsgemäße Zubereitung kann die Reaktivverdünner oder die Weichmacher jeweils einzeln, oder im Gemisch enthalten.

Neben Reaktivverdünnern und Weichmachern kann die erfindungsgemäße Zubereitung noch weitere Zusatzstoffe enthalten, die in der Regel zur Modifikation bestimmter Materialeigenschaften der Zubereitung vor oder nach der Verarbeitung dienen oder die Stabilität der Zubereitung vor oder nach der Verarbeitung fördern.

Gegenstand der Erfindung ist daher weiterhin eine Zubereitung, enthaltend ein erfindungsgemäßes Polyurethan oder ein Gemisch aus zwei oder mehr davon sowie einen Reaktivverdünner oder einen Weichmacher oder deren Gemisch, sowie eine oder mehrere Verbindungen ausgewählt aus der Gruppe bestehend aus Feuchtigkeits-Stabilisatoren, Antioxidantien, Katalysatoren, Tackifiern, Füllstoffen und UV-Stabilisatoren.

Häufig ist es sinnvoll, die erfindungsgemäßen Zubereitungen gegenüber eindringender Feuchtigkeit zu stabilisieren, um die Lagerbarkeit (shelf-life) zu erhöhen. Eine solche Verbesserung der Lagerbarkeit läßt sich beispielsweise durch den Einsatz von Feuchtigkeits-Stabilisatoren erreichen. Als Feuchtigkeits-Stabilisatoren eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muß die Reaktivität der Stabilisatoren gegenüber in die Zubereitung eingedrungener Feuchtigkeit höher sein, als die Reaktivität der Endgruppen des in der Zubereitung vorliegenden erfindungsgemäßen Polyurethans oder des Gemischs aus zwei oder mehr Polyurethanen.

Als Feuchtigkeits-Stabilisatoren eignen sich beispielsweise Isocyanate.

In einer bevorzugten Ausführungsform werden als Feuchtigkeits-Stabilisatoren jedoch Silane eingesetzt. Beispielsweise Vinylsilane wie 3-Vinylpropyltri-ethoxysilan, Oximsilane wie Methyl-O,O',O"-butan-2-on-trioximosilan oder O,O',O",O"'-Butan-2-ontetraoximosilan (CASNr. 022984-54-9 und 034206-40-1) oder Benzamidosilane wie Bis(N-Methylbenzamido)methylethoxysilan (CASNr. 16230-35-6).

Ebenfalls als Feuchtigkeits-Stabilisatoren geeignet sind die oben genannten Reaktivverdünner, sofern sie ein Molekulargewicht (Mₙ) von weniger als etwa 5.000 aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemäßen Polyurethans.

Die Erfindungsgemäße Zubereitung enthält in der Regel etwa 0 bis etwa 6 Gew.-% Feuchtigkeits-Stabilisatoren.

Die erfindungsgemäße Zubereitung kann weiterhin bis zu etwa 7 Gew.-%, insbesondere etwa 3 bis etwa 5 Gew. % Antioxidantien enthalten.

Die erfindungsgemäße Zubereitung kann weiterhin bis zu etwa 5 Gew.-% Katalysatoren zur Steuerung der Härtungsgeschwindigkeit enthalten. Als Katalysatoren geeignet sind beispielsweise metallorganische Verbindungen wie Eisen- oder Zinnverbindungen geeignet, insbesondere die 1,3-Dicarbonylverbindungen des Eisens oder des 2- bzw. 4-wertigen Zinns, insbesondere die Sn(II)-Carboxylate bzw. die Dialkyl-Sn-(IV)-Dicarboxylate oder die entsprechenden Dialkoxylate, beispielsweise Dibutylzinndilaurat, Dibutylzinndiacetat, Dioctylzinndiacetat, Dibutylzinnmaleat, Zinn(II)octoat, Zinn(Il]phenolat oder die Acetylacetonate des 2- bzw. 4-wertigen Zinns. Ebenfalls als Katalysatoren verwendet werden können die oben genannten Amine, die bereits bei der Herstellung des erfindungsgemäßen Polyurethans eingesetzt werden können.

Die erfindungsgemäße Zubereitung kann, wenn eine Verwendung als Klebstoff vorgesehen ist, bis zu etwa 30 Gew.-% an üblichen Tackifiern enthalten. Als Tackifier geeignet sind beispielsweise Harze, Terpen-Oligomere, Cumaron-/Inden-Harze, aliphatische, petrochemische Harze und modifizierte Phenolharze.

Die erfindungsgemäße Zubereitung kann bis zu etwa 80 Gew.-% an Füllstoffen enthalten. Als Füllstoffe geeignet sind beispielsweise gegenüber Isocyanaten und Silanen inerte anorganische Verbindungen wie Kreide, Kalkmehl, gefällte Kieselsäure, pyrogene Kieselsäure, Zeolithe, Bentonite, gemahlene Mineralstoffe, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln. Gegebenenfalls können Füllstoffe eingesetzt werden, die der Zubereitung Thixotropie verleihen, beispielsweise quellbare Kunststoffe wie PVC.

Die erfindungsgemäße Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein LTV-Stabilisator eingesetzt wird, der eine Silangruppe trägt und beim Vernetzen bzw. Aushärten in das Endprodukt eingebaut wird.

Hierzu besonders geeignet sind die Produkte Lowilite 75 und Lowilite 77 (Fa. Great Lakes, USA).

Ein weiterer Gegenstand der vorliegenden Erfindung ist eine Zubereitung, enthaltend
- etwa 10 Gew.-% bis etwa 100 Gew.-% eines erfindungsgemäßen Polyurethans oder eines Gemischs aus zwei oder mehr erfindungsgemäßen Polyurethanen,
- etwa 0 Gew.-% bis etwa 70 Gew.-% eines Reaktivverdünners oder eines Gemischs aus zwei oder mehr Reaktivverdünnern,
- etwa 0 Gew.-% bis etwa 30 Gew.-% eines Weichmachers oder eines Gemischs aus zwei oder mehr Weichmachern,
- etwa 0 Gew.-% bis etwa 5 Gew.-% eines Feuchtigkeits-Stabilisators oder eines Gemischs aus zwei oder mehr Feuchtigkeits-Stabilisatoren,
- etwa 0 Gew.-% bis etwa 30 Gew.-% eines Tackifiers oder eines Gemischs aus zwei oder mehr Tackifiern,
- etwa 0 Gew.-% bis etwa 5 Gew.-% eines UV-Stabilisators oder eines Gemischs aus zwei oder mehr UV-Stabilisatoren,
- etwa 0 Gew.-% bis etwa 5 Gew.-% eines Katalysators oder eines Gemischs aus zwei oder mehr Katalysatoren und
- etwa 0 Gew.-% bis etwa 80 Gew.-% eines Füllstoffs oder eines Gemischs aus zwei oder mehr Füllstoffen.

Die erfindungsgemäßen Polyurethane sowie die erfindungsgemäßen Zubereitungen sind für ein breites Feld von Anwendungen in Bereich der Kleb- und Dichtstoffe geeignet. Besonders geeignet sind die erfindungsgemäßen Zubereitungen beispielsweise als Kontaktklebstoff, 1K-Klebstoff, 2K-Klebstoff, Montageklebstoff, Dichtmasse, insbesondere Fugendichtmasse, und zur Oberflächenversiegelung.

Gegenstand der Erfindung ist daher auch die Verwendung eines erfindungsgemäßen Polyurethans oder einer erfindungsgemäßen Zubereitung als Klebstoff, Dichtmasse, Oberflächenbeschichtungsmittel, Spachtelmasse oder zur Herstellung von Formteilen.

Die erfindungsgemäßen Polyurethane oder die erfindungsgemäßen Zubereitungen sind beispielsweise als Klebstoff für Kunststoffe, Metalle, Spiegel, Glas, Keramik, mineralische Untergründe, Holz, Leder, Textilien, Papier, Pappe und Gummi geeignet, wobei die Materialien jeweils mit sich selbst oder beliebig untereinander verklebt werden können.

Weiterhin eignen sich die erfindungsgemäßen Polyurethane oder die erfindungsgemäßen Zubereitungen beispielsweise als Dichtstoff für Kunststoffe, Metalle, Spiegel, Glas, Keramik, mineralische Untergründe, Holz, Leder, Textilien, Papier, Pappe und Gummi, wobei die Materialien jeweils mit sich selbst oder beliebig gegeneinander abgedichtet werden können.

Weiterhin eignen sich die erfindungsgemäßen Polyurethane oder die erfindungsgemäßen Zubereitungen beispielsweise als Oberflächenbeschichtungsmittel für Oberflächen aus Kunststoff, Metall, Glas, Keramik, mineralischen Materialien, Holz, Leder, Textilien, Papier, Pappe und Gummi.

Die erfindungsgemäßen Polyurethane oder die erfindungsgemäßen Zubereitungen sind weiterhin zur Herstellung von Formteilen beliebiger Raumform geeignet.

Ein weiteres Anwendungsgebiet für die erfindungsgemäßen Polyurethane oder die erfindungsgemäßen Zubereitungen ist die Verwendung als Dübel- Loch- oder Rißspachtelmasse.

Bei allen oben genannten Anwendungen können die erfindungsgemäßen Polyurethane oder die erfindungsgemäßen Zubereitungen als einkomponentige, d.h., mit Luftfeuchtigkeit aushärtende Systeme oder als zweikomponentige Systeme eingesetzt werden, wobei die zweite Komponente beispielsweise Wasser enthält.

Die folgenden Beispiele dienen der näheren Erläuterung der Erfindung.

### Beispiel 1: Herstellung eines Silan-terminierten Polyurethans

2,35g TDI, 96g Polypropylenglykol mit einem Molekulargewicht Mₙ von 12.000, einer PD von 1,12 und einer OH-Funktionalität von 1,98 wurden zusammen mit 0,01 g Dibutylzinndilaurat bei Raumtemperatur in einem Kolben vorgelegt, unter Rühren auf 75°C erhitzt. Nach zwei Stunden wurde auf 60°C abgekühlt und es wurden 1,6 g 3-Aminopropyltrimethoxysilan zugegeben. Nach weiteren 10 Minuten Rühren wurde der Ansatz warm in luftdicht verschließbare Gefäße abgefüllt.

### Beispiel 2: Herstellung einer Fugendichtungsmasse

In einem Vakuum-Planetendissolver wurden 29 Teile des Polyurethans aus Beispiel 1 mit 3 Teilen Vinyltrimethoxysilan bei Zimmertemperatur verrührt. Die Masse wurde mit 42 Teilen Kreide, 6 Teilen Titandioxid 0,3 Teilen Benztriazol, 0,3 Teilen Tinuvin-765 (Fa. Ciba Geigy) versetzt und unter Vakuum (25 mbar) bei 2.000 bis 3.000 U/min solange gerührt, bis eine homogene, glatte Masse entstand. Die Paste wurde abschließend mit 0,2 Teilen 1-Dodecylamin, 1 Teil 3-Aminopropyltrimethoxysilan ond 0,1 Teil Dibutylzinndilaurat unter Vakuum verrührt und in eine handelsübliche Kartusche für Fugendichtmassen abgefüllt.

### Vergleichsbeispiel 1: Herstellung eines Silan-terminierten Polyurethans

Es wurde wie in Beispiel 1 verfahren, wobei statt dem oben genannten Polypropylen ein Polypropylen mit Molekulargewicht Mₙ von 4.000, einer größeren Polydispersität und einer geringeren OH-Funktionalität eingesetzt wurde.

### Vergleichsbeispiel 2: Herstellung einer Fugendichtungsmasse

Es wurde wie in Beispiel 2 verfahren, wobei als Polyurethan das Polyure-than aus Vergleichsbeispiel 1 eingsetzt wurde.

### Überprüfung der Bruchdehnung und Bruchkraft:

Die Fugendichtungsmassen aus Beispiel 2 und Vergleichsbeispiel 2 wurden Bruchkraftund Bruchdehnungstests nach DIN EN 29046 5/91 unterzogen.

| | Vergleichsbeispiel 2 | Beispiel 2 |
|---|---|---|
| Bruchdehnung | 89% | 276% |
| Bruchkraft [N/mm²] | 0,39 | 0,49 |

## Patentansprüche

1. Polyurethan, herstellbar durch Umsetzung von mindestens zwei Komponenten A und B, wobei
a) als Komponente A ein Polyisocyanat oder ein Gemisch aus zwei oder mehr Polyisocyanaten und
b) als Komponente B ein Polyol oder ein Gemisch aus zwei oder mehr Polyolen
eingesetzt wird, **dadurch gekennzeichnet, daß** Komponente B einen Polyether mit einem Molekulargewicht (Mₙ) von mindestens 4.000 und
c) einer Polydispersität PD (M_{w}/Mₙ) von weniger als 1,5 oder
d) einer OH-Funktionalität von 1,8 bis 2,0, oder
e) einer Polydispersität PD (M_{w}/Mₙ) von weniger als 1,5 und einer OH-Funktionalität von 1,8 bis 2,0,
oder ein Gemisch aus zwei oder mehr solcher Polyether enthält und das Polyurethan nach der Umsetzung mindestens eine mit Wasser reaktive Silangruppe als Endgruppe aufweist oder deren Gemisch mit einer Isocyanatgruppe.

2. Polyurethan nach Anspruch 1, **dadurch gekennzeichnet, daß** der Anteil an Polyethem mit einem Molekulargewicht (Mₙ) von mindestens 4.000 und
c) einer Polydispersität PD (M_{w}/Mₙ) von weniger als 1,5 oder
d) einer OH-Funktionalität von 1,8 bis 2,0, oder
e) einer Polydispersität PD (M_{w}/Mₙ) von weniger als 1,5 und einer OH-Funktionalität von 1,8 bis 2,0,
an Komponente B mindestens 80 Gew.-% beträgt.

3. Polyurethan nach Anspruch 1 oder 2, **dadurch gekennzeichnet, daß** das Molekulargewicht des Polyurethans mehr als etwa 2 000 bis etwa 40 000 beträgt.

4. Polyurethan nach einem der Ansprüche 1 bis 3, **dadurch gekennzeichnet, daß** es eine Endgruppe der allgemeinen Formel I 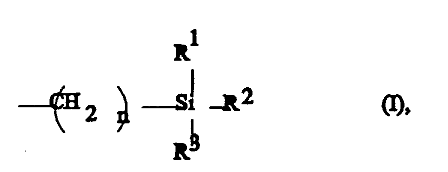 aufweist, wobei R¹ und R² gleich oder verschieden sind und unabhängig voneinander für einen linearen oder verzweigten C₁₋₁₀-Alkylrest oder für R³ stehen, R³ für einen linearen oder verzweigten C₁₋₈-Alkoxy- oder C₁₋₈-Acyloxyrest und n für eine Zahl von 1 bis 8 steht.

5. Zubereitung, enthaltend ein erstes Polyurethan nach einem der Ansprüche 1 bis 4 und ein zweites Polyurethan mit mindestens einer gegenüber Wasser reaktiven Endgruppe, dessen Molekulargewicht (Mₙ) höchstens 8.000 beträgt und um mindestens 3.000 geringer ist als das Molekulargewicht des ersten Polyurethans, als Reaktivverdünner.

6. Zubereitung nach Anspruch 5, **dadurch gekennzeichnet, daß** der Reaktivverdünner als mindestens eine mit Wasser reaktive Endgruppe eine Endgruppe der allgemeinen Formel I 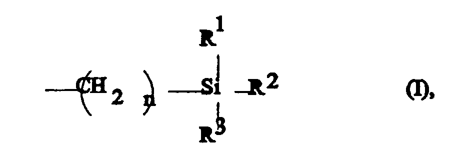 aufweist, wobei R¹ und R² gleich oder verschieden sind und unabhängig voneinander für einen linearen oder verzweigten C₁₋₁₀-Alkylrest oder für R³ stehen und R³ für einen linearen oder verzweigten C₁₋₈-Alkoxy- oder C₁₋₈-Acyloxyrest steht.

7. Zubereitung nach einem der Ansprüche 5 oder 6, **dadurch gekennzeichnet, daß** der Anteil an Reaktivverdünner, bezogen auf die gesamte Zubereitung, 1 Gew.-% bis 70 Gew.-% beträgt.

8. Zubereitung, enthaltend ein erstes Polyurethan nach einem der Ansprüche 1 bis 4 und einen gegenüber dem ersten Polyurethan inerten Weichmacher.

9. Zubereitung nach einem der Ansprüche 5 bis 8, **dadurch gekennzeichnet, daß** sie eine Viskosität von höchstens 200.000 mPas (Brookfield RVT, 23°C, Spindel 7, 2,5 U/min) aufweist.

10. Zubereitung nach einem der Ansprüche 5 bis 9, **dadurch gekennzeichnet, daß** sie eine oder mehrere Verbindungen ausgewählt aus der Gruppe bestehend aus Weichmachern, Feuchtigkeits-Stabilisatoren, Antioxi-dantien, Katalysatoren, Härtern, Füllstoffen und UV-Stabilisatoren enthält.

11. Zubereitung nach einem der Ansprüche 5 bis 10, **dadurch gekennzeichnet, daß** sie einen UV-Stabilisator enthält, der eine Alkoxysilangruppe aufweist die unter Feuchtigkeitseinfluß kovalent an das Polyurethan nach einem der Ansprüche 1 bis 3 oder den Reaktivverdünner nach einem der Ansprüche 5 bis 7 gebunden wird.

12. Zubereitung nach einem der Ansprüche 5 bis 11, enthaltend
- 10 Gew.-% bis 100 Gew.-% eines Polyurethans nach einem der Ansprüche 1 bis 4 oder eines Gemischs aus zwei oder mehr solcher Polyurethane,
- 0 Gew.-% bis 70 Gew.-% eines Reaktiwerdünners oder eines Gemischs aus zwei oder mehr Reaktiwerdünnem,
- 0 Gew.-% bis 30 Gew.-% eines Weichmachers oder eines Gemischs aus zwei oder mehr Weichmachern,
- 0 Gew.-% bis 5 Gew.-% eines Feuchtigkeits-Stabilisators oder eines Gemischs aus zwei oder mehr Feuchtigkeits-Stabilisato ren,
- 0 Gew.-% bis 30 Gew.-% eines Tackifiers oder eines Gemischs aus zwei oder mehr Tackifiern,
- 0 Gew.-% bis 5 Gew.-% eines UV-Stabilisators oder eines Gemischs aus zwei oder mehr UV-Stabilisatoren,
- 0 Gew.-% bis 5 Gew.-% eines Katalysators oder eines gemischs aus zwei oder mehr Katalysatoren und
- 0 Gew.-% bis 80 Gew.-% eines Füllstoffs oder eines Gemischs aus zwei oder mehr Füllstoffen.

13. Verwendung eines Polyurethans nach einem der Ansprüche 1 bis 4 oder einer Zubereitung nach einem der Ansprüche 5 bis 12 als Klebstoff, Dichtmasse, Oberflächenbeschichtungsmittel, Spachtelmasse oder zur Herstellung von Formteilen.

## Claims

1. A polyurethane obtainable by reacting at least two components A and B,
a) a polyisocyanate or a mixture of two or more polyisocyanates being used as component A and
b) a polyol or a mixture of two or more polyols being used as component B,
**characterized in that** component B contains a polyether with a molecular weight (Mₙ) of at least 4000 and
c) a polydispersity PD (M_{w}/Mₙ) of less than 1.5 or
d) an OH functionality of about 1.8 to 2.0 or
e) a polydispersity PD (M_{w}/Mₙ) of less than 1.5 and an OH functionality of about 1.8 to about 2.0
or a mixture of two or more such polyether and, after the reaction, the polyurethane contains at least one silane group reactive to water as a terminal group or a mixture thereof with an isocyanate group.

2. A polyurethane as claimed in claim 1, **characterized in that** polyethers with a molecular (Mₙ) of at least 4,000 and
c) a polydispersity PD (M_{w}/Mₙ) of less than 1.5 or
d) an OH functionality of 1.8 to 2.0 or
e) a polydispersity PD (M_{w}/Mₙ) of less than 1.5 and an OH functionality of 1.8 to 2.0
make up at least 80% by weight of component B.

3. A polyurethane as claimed in claim 1 or 2, **characterized in that** the molecular weight of the polyurethane is more than about 2,000 to about 40,000.

4. A polyurethane as claimed in any of claims 1 to 3, **characterized in that** it contains a terminal group corresponding to general formula I: 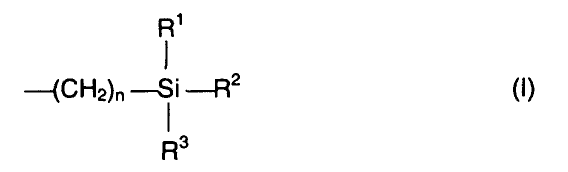 in which R¹ and R² are the same or different and, independently of one another, represent a linear or branched C₁₋₁₀ alkyl group or have the same meaning as R³, R³ is a linear or branched C₁₋₈ alkoxy group or C₁₋₈ acyloxy group and n is a number of 1 to 8.

5. A preparation containing a first polyurethane according to any of claims 1 to 4 and a second polyurethane containing at least one terminal group reactive to water, of which the molecular weight (Mₙ) is at most 8,000 and is lower by at least 3,000 than the molecular weight of the first polyurethane as a reactive diluent.

6. A preparation as claimed in claim 5, **characterized in that** the reactive diluent contains a terminal group corresponding to general formula I: 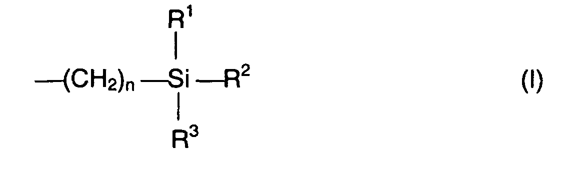 in which R¹ and R² are the same or different and, independently of one another, represent a linear or branched C₁₋₁₀ alkyl group or have the same meaning as R³ and R³ is a linear or branched C₁₋₈ alkoxy group or C₁₋₈ acyloxy group,
as at least one water-reactive terminal group.

7. A preparation as claimed in claim 5 or 6, **characterized in that** the percentage content of reactive diluent, based on the preparation as a whole, is between 1% by weight and 70% by weight.

8. A preparation containing a first polyurethane according to any of claims 1 to 4 and a plasticizer inert to the first polyurethane.

9. A preparation as claimed in any of claims 5 to 8, **characterized in that** it has a viscosity of at most 200,000 mPas (Brookfield RVT, 23°C, spindle 7, 2.5 r.p.m.).

10. A preparation as claimed in any of claims 5 to 9, **characterized in that** it contains one or more compounds selected from the group consisting of plasticizers, moisture stabilizers, antioxidants, catalysts, hardeners, fillers and UV stabilizers.

11. A preparation as claimed in any of claims 5 to 10, **characterized in that** it contains a UV stabilizer containing an alkoxysilane group which is covalently bonded under the influence of moisture to the polyurethane according to any of claims 1 to 3 or to the reactive diluent according to any of claims 5 to 7.

12. A preparation as claimed in any of claims 5 to 11 containing
- 10% by weight to 100% by weight of a polyurethane according to claims 1 to 4 or a mixture of two or more such polyurethanes,
- 0% by weight to 70% by weight of a reactive diluent or a mixture of two or more reactive diluents,
- 0% by weight to 30% by weight of a plasticizer or a mixture of two or more plasticizers,
- 0% by weight to 5% by weight of a moisture stabilizer or a mixture of two more moisture stabilizers,
- 0% by weight to 30% by weight of a tackifier or a mixture of two or more tackifiers,
- 0% by weight to 5% by weight of a UV stabilizer or a mixture of two or more UV stabilizers,
- 0% by weight to 5% by weight of a catalyst or a mixture of two or more catalysts and
- 0% by weight to about 80% by weight of a filler or a mixture of two or more fillers.

13. The use of the polyurethane according to any of claims 1 to 4 or the preparation according to any of claims 5 to 12 as an adhesive, sealing compound, surface coating composition, stopping compound or for the production of mouldings.

## Revendications

1. Polyuréthane que l'on peut préparer par réaction d'au moins deux composants A et B, dans lequel
a) un polyisocyanate ou un mélange de deux ou plusieurs polyisocyanates sont mis en oeuvre en tant que composant A, et
b) un polyol ou un mélange de deux ou plusieurs polyols sont mis en oeuvre en tant que composant B,
**caractérisé en ce que** le composant B contient un polyéther ayant une masse moléculaire (Mₙ) d'au moins 4 000 et
c) une polydispersité PD (M_{w}/Mₙ) inférieure à 1,5 ou
d) une fonctionnalité OH de 1,8 à 2,0 ou
e) une polydispersité PD (M_{w}/Mₙ) inférieure à 1,5 et une fonctionnalité OH de 1,8 à 2,0,
ou un mélange de deux ou plusieurs de ces polyéthers, et après la réaction le polyuréthane présente au moins un groupe silane en tant que groupe terminal, réagissant avec l'eau ou bien leur mélange avec un groupe isocyanate.

2. Polyuréthane selon la revendication 1, **caractérisé en ce que** la proportion de polyéthers ayant une masse moléculaire (Mₙ) d'au moins 4 000 et
c) une polydispersité PD (M_{w}/Mₙ) inférieure à 1,5 ou
d) une fonctionnalité OH de 1,8 à 2,0 ou
e) une polydispersité PD (M_{w}/Mₙ) inférieure à 1,5 et une fonctionnalité OH de 1,8 à 2,0,
représente au moins 80% en poids du composant B.

3. Polyuréthane selon la revendication 1 ou 2, **caractérisé en ce que** la masse moléculaire du polyuréthane est supérieure à environ 2 000 jusqu'à environ 40 000.

4. Polyuréthane selon l'une quelconque des revendications 1 à 3, **caractérisé en ce qu'**il présente un groupe terminal de formule générale I 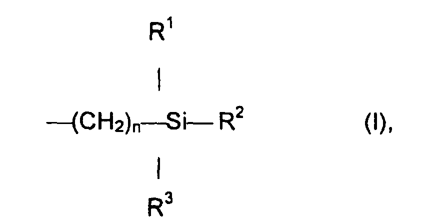 dans laquelle R¹ et R² sont identiques ou différents et représentent indépendamment l'un de l'autre, un résidu alkyle en C₁ à C₁₀, linéaire ou ramifié ou bien R³, R³ représente un résidu alcoxy en C₁ à C₈ ou acyloxy en C₁ à C₈, linéaire ou ramifié et n représente un nombre de 1 à 8.

5. Préparation, contenant un premier polyuréthane selon l'une quelconque des revendications 1 à 4 et un deuxième polyuréthane ayant au moins un groupe terminal réactif envers l'eau, dont la masse moléculaire (Mₙ) est de 8 000 au maximum, et inférieure d'au moins 3 000 à la masse moléculaire du premier polyuréthane, en tant que diluant de réactif.

6. Préparation selon la revendication 5, **caractérisée en ce que** le diluant de réactif présente en tant qu'au moins un groupe terminal réagissant avec l'eau, un groupe terminal de formule générale I 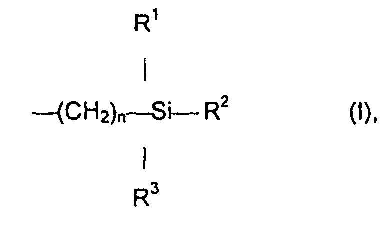 dans laquelle R¹ et R² sont identiques ou différents et représentent indépendamment l'un de l'autre, un résidu alkyle en C₁ à C₁₀, linéaire ou ramifié ou bien R³, et R³ représente un résidu alcoxy en C₁ à C₈ ou acyloxy en C₁ à C₈, linéaire ou ramifié.

7. Préparation selon l'une quelconque des revendications 5 ou 6, **caractérisée en ce que** la proportion de diluant de réactif est de 1% en poids à 70% en poids par rapport à la préparation totale.

8. Préparation contenant un premier polyuréthane selon l'une quelconque des revendications 1 à 4, et un plastifiant inerte envers le premier polyuréthane.

9. Préparation selon l'une quelconque des revendications 5 à 8, **caractérisée en ce qu'**elle présente une viscosité de 200 000 mPa.s au maximum (Brookfield RVT, 23°C, broche N° 7, 2,5 tr/min).

10. Préparation selon l'une quelconque des revendications 5 à 9, **caractérisée en ce qu'**elle contient un ou plusieurs composés choisis dans le groupe formé par les plastifiants, les stabilisants envers l'humidité, les antioxydants, les catalyseurs, les durcisseurs, les charges et les stabilisants envers les UV.

11. Préparation selon l'une quelconque des revendications 5 à 10, **caractérisée en ce qu'**elle contient un stabilisant envers les UV, qui présente un groupe alcoxysilane qui, sous l'influence de l'humidité, est lié de façon covalente au polyuréthane selon l'une quelconque des revendications 1 à 3, ou au diluant de réactif selon l'une quelconque des revendications 5 à 7.

12. Préparation selon l'une quelconque des revendications 5 à 11, contenant
- 10% en poids à 100% en poids d'un polyuréthane selon l'une quelconque des revendications 1 à 4 ou d'un mélange de deux ou plusieurs de ces polyurethanes,
- 0% en poids à 70% en poids d'un diluant de réactif ou d'un mélange de deux ou plusieurs diluants de réactif,
- 0% en poids à 30% en poids d'un plastifiant ou d'un mélange de deux ou plusieurs plastifiants,
- 0% en poids à 5% en poids d'un stabilisant envers l'humidité ou d'un mélange de deux ou plusieurs stabilisants envers l'humidité,
- 0% en poids à 30% en poids d'un agent donnant du collant ou d'un mélange de deux ou plusieurs agents donnant du collant,
- 0% en poids à 5% en poids d'un stabilisant envers les UV ou d'un mélange de deux ou plusieurs stabilisants envers les UV,
- 0% en poids à 5% en poids d'un catalyseur ou d'un mélange de deux ou plusieurs catalyseurs, et
- 0% en poids à 80% en poids d'une charge ou d'un mélange de deux ou plusieurs charges.

13. Utilisation d'un polyuréthane selon l'une quelconque des revendications 1 à 4 ou d'une préparation selon l'une quelconque des revendications 5 à 12, en tant que colle, composant pour joint d'étanchéité, agent de revêtement de surface, mastic ou pour préparer des pièces moulées.
